(19) **Europäisches Patentamt**
**European Patent Office**
**Office européen des brevets**

(11) **EP 2 038 847 B1**

(12) **EUROPÄISCHE PATENTSCHRIFT**

(45) Veröffentlichungstag und Bekanntmachung des Hinweises auf die Patenterteilung:
**05.05.2010 Patentblatt 2010/18**

(51) Int Cl.:
***G06T 15/00*** *(2006.01)*

(21) Anmeldenummer: **08707556.0**

(86) Internationale Anmeldenummer:
**PCT/EP2008/000887**

(22) Anmeldetag: **05.02.2008**

(87) Internationale Veröffentlichungsnummer:
**WO 2008/101596 (28.08.2008 Gazette 2008/35)**

(54) **VERFAHREN UND VORRICHTUNG ZUR DARSTELLUNG VON 3D BILDDATENSÄTZEN AUF 2D BILDERN**

METHOD AND APPARATUS FOR REPRESENTING 3D IMAGE RECORDS IN 2D IMAGES

PROCÉDÉ ET DISPOSITIF DE REPRÉSENTATION D'ENREGISREMENTS DE DONNÉES D'IMAGE 3D SUR DES IMAGES 2D

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **22.02.2007 DE 102007008767**

(43) Veröffentlichungstag der Anmeldung:
**25.03.2009 Patentblatt 2009/13**

(73) Patentinhaber: **TomTec Imaging Systems GmbH 85716 Unterschleissheim (DE)**

(72) Erfinder: **BRABEC, Stefan 82319 Starnberg (DE)**

(74) Vertreter: **Schinkel, Reta et al Müller Schupfner & Partner Patentanwälte Bavariaring 11 80336 München (DE)**

(56) Entgegenhaltungen:
**US-A1- 2005 134 582**

- **WEISKOPF D, ERTL T: "Real-Time Depth-Cueing beyond Fogging" JOURNAL OF GRAPHICS TOOLS, Bd. 7, Nr. 4, 2002, Seiten 83-90, XP008095696 in der Anmeldung erwähnt**
- **EBERT D ET AL: "Volume illustration: non-photorealistic rendering of volume models" PROCEEDINGS VISUALIZATION 2000. VIS 2000. SALT LAKE CITY, UT, OCT. 8 - 13, 2000; [ANNUAL IEEE CONFERENCE ON VISUALIZATION], LOS ALAMITOS, CA : IEEE COMP. SOC, US, 1. Januar 2000 (2000-01-01), Seiten 195-202, XP031172691 ISBN: 978-0-7803-6478-3 in der Anmeldung erwähnt**

**Beschreibung**

Die Erfindung betrifft das Gebiet der Darstellung von dreidimensionalen (3D) Bilddatensätzen auf zweidimensionalen (2D) Bildern und insbesondere ein Verfahren und eine entsprechende Vorrichtung hierzu.

Mit medizinischen Bildgebungsverfahren wie zum Beispiel Ultraschall (US), Röntgentechniken wie insbesondere Computertomografie (CT), Magnetresonanztomografie (MRT) oder nuklearmedizinischen Bildgebungsverfahren wie Positionen-Emissionstomografie (PET) können dreidimensionale Bilddatensätze, auch Volumendaten genannt, des menschlichen oder tierischen Körper gewonnen werden. Dabei ergibt sich nun das Problem, wie die so gewonnenen dreidimensionalen (3D) Daten geeignet dargestellt werden, da die üblichen Bildausgabegeräte wie Bildschirm und Drukker lediglich zweidimensionale (2D) Bildebenen zur Verfügung stellen. Eine Möglichkeit, einen dreidimensionalen (3D) Bilddatensatz darzustellen, besteht darin, eine Schnittebene durch den Datensatz zu legen und lediglich die Bildelemente (Voxel) des 3D Bilddatensatzes darzustellen, die auf dieser Schnittebene liegen. Durch Verschieben der Schnittebene oder durch Herstellung von vielen Schnittebenen kann der Arzt sich ein dreidimensionales Bild des dargestellten Objektes machen.

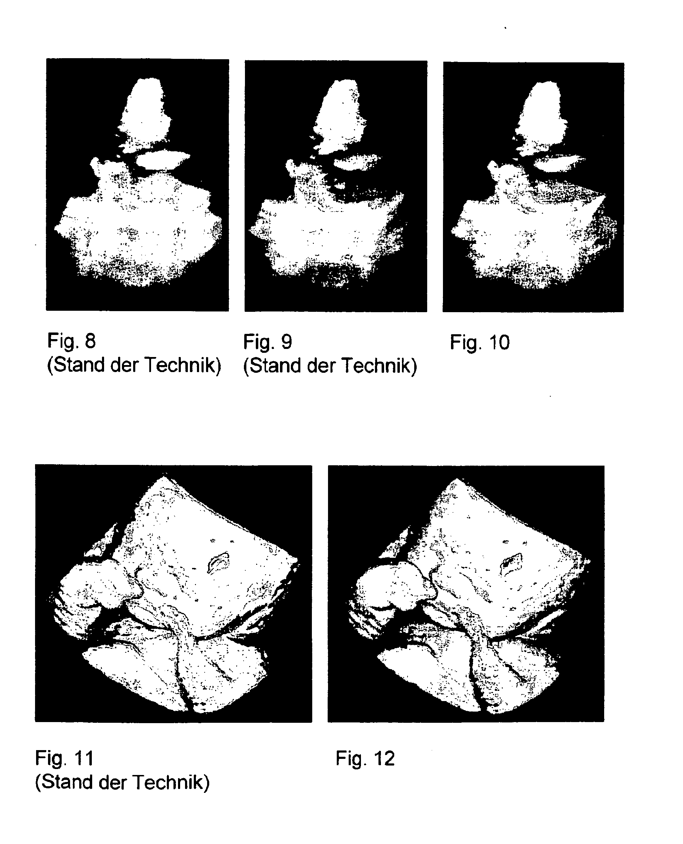

Es gibt jedoch auch Verfahren, mit denen der gesamte 3D Bilddatensatz gleichzeitig dargestellt werden kann. Es ist beispielsweise möglich, aus einem dreidimensionalen Ultraschallbild eines Fötus' ein 2D Bild zu generieren, welches den Fötus in einer digital erzeugten Draufsicht darstellt, wie z.B. in Fig. 11 gezeigt. Um ein solches Bild zu erzeugen, werden aus dem 3D Bilddatensatz durch ein geeignetes Bildverarbeitungsprogramm die Grenzflächen zwischen dem Fötus und dem umgebenden Fruchtwasser extrahiert und diese mit Licht- und Schatteneffekten gemäß einer virtuellen Beleuchtungsquelle versehen. Ein solches Verfahren wird mit "Surface Rendering" bezeichnet.

Auch bei Bilddatensätzen mit weniger deutlichen Grenzflächen ist eine Darstellung des gesamten Bilddatensatzes auf einem 2D Bild möglich. Dabei werden die einzelnen Voxel des 3D Bildvolumens gemäß ihren optischen Eigenschaften klassifiziert, zum Beispiel als transparent oder opak, und daraufhin wird wiederum aus einer bestimmten Blickrichtung ein 2D Bild erzeugt, welches einer Draufsicht auf den 3D Bilddatensatz entspricht. Derartige Verfahren werden allgemein mit "Volume Rendering" bezeichnet. Ein Beispiel für ein durch Volume Rendering erzeugtes 2D Bild eines 3D Ultraschall-Bilddatensatzes des Herzens ist in Fig. 8 dargestellt.

Rendering-Verfahren werden im Deutschen auch gelegentlich mit "digitale Bildsynthese" bezeichnet. Der Begriff "Rendering" bezeichnet allgemein Verfahren zur Generierung eines 2D Bildes aus einer 3D Beschreibung. Dies kann ein 3D Bilddatensatz sein, aber auch eine geometrische Beschreibung wie z.B. ein Gittermodell, eine analytische/ parametrische Beschreibung wie z.B. Formeln oder Berechnungsvorschriften wie z.B. Fraktale.

Mit "Volume-Rendering" werden im Allgemeinen, wie auch in dieser Anmeldung, solche Verfahren bezeichnet, mit denen aus einem 3D Bilddatensatz ein 2D Bild erzeugt werden kann. Dieses vermittelt vorzugsweise einen gewissen Tiefeneindruck des 3D Bildes. Das Surface-Rendering ist eine spezielle Variante des Volume-Rendering.

Bei der Darstellung der durch Rendering erzeugten 2D Bilder wird oft eine farbige Darstellung bevorzugt. Dabei wird jedem Voxel des 3D Bildvolumens oder jedem Pixel des 2D Bildes eine Farbe zugeordnet, die anhand einer Farbtabelle aus dem jeweiligen Voxelwert bzw. Pixelwert ermittelt wird.

Während bei einer Darstellung gemäß Fig. 11 oder Fig. 8 lokale Eigenschaften (zum Beispiel Oberflächenbeschaffenheit, Krümmung etc.) relativ gut und effizient durch lokale virtuelle Beleuchtung ("gradient-lighting") dargestellt werden können, geht oftmals der Tiefeneindruck verloren. Insbesondere bei der Darstellung von Volumendatensätzen von komplizierten anatomischen Regionen (zum Beispiel 3D/4D Ultraschallbilder) ist es oftmals schwierig, die globale Anordnung zu verstehen.

Bisherige Verfahren zur Verbesserung des Tiefeneindrucks bei 3D Bilddatensätzen werden im Allgemeinen mit "depth-cueing" bezeichnet. Unter depth-cueing versteht man eine Gruppe von Effekten, die abhängig von der Tiefe relativ zu dem Betrachter bestimmte Material- oder Beleuchtungseigenschaften ändern, um einen besseren Tiefeneindruck zu erhalten. Weit verbreitet ist zum Beispiel das so genannte "fogging" ("Vernebeln"), bei dem die Farbe des Objektes nach hinten in zum Beispiel Weiß oder Schwarz abgleitet. Ein anderes Verfahren wird in D. Weiskopf, T. Ertl: "Real-Time Depth-Cueing beyond Fogging", Journal of Graphics Tools, Vol. 7, Nr. 4, 2002 beschrieben. In diesem Artikel wird vorgeschlagen, die Farbsättigung zu verändern, sodass weiter vorne im Bild die volle Farbsättigung verwendet wird, während weiter hinten nur Graustufen eingesetzt werden.

Der Artikel D. Ebert, P. Rheingans: "Volume Illustration: Non-Photorealistic Rendering of Volume Data", IEEE Visualization 2000, 2000 schlägt vor, das Intensitäts-Depth-Cueing mit einer leichten Änderung des Farbtons zu kombinieren. Beispielsweise kann der Farbton nach hinten hin ins Bläuliche abgleiten, wie schon von Leonardo da Vinci praktiziert. Solche Verfahren, bei denen mit zunehmender Tiefe der Farbton verändert wird, wirken sich je nach vorherrschender Farbe des Bildes sehr unterschiedlich aus. Wenn beispielsweise zur Erzeugung des Bildes eine Farbtabelle verwendet wurde, welche bereits einen Blau-Gradienten enthält, hat eine Tiefenveränderung nach Blau nur wenig Effekt und wirkt eher störend.

Die US 2006/0173326 beschreibt ebenfalls ein Verfahren zum Depth-Cueing bei Ultraschallbildern, bei welchem die Farbe von "Colour-Flow" (Doppler) Bildern mit zunehmendem Abstand vom Betrachter verändert wird, um einen Tiefeneindruck des Bildes zu vermitteln.

Eine andere Möglichkeit, einen Tiefeneindruck zu erzeugen, ist die perspektivische Verkürzung. Diese ist jedoch gerade bei anatomischen Daten nicht geeignet, da diese Bilder oft sehr unübersichtlich sind und der Betrachter nicht entscheiden kann, ob eine perspektivische Verkürzung oder eine Verkleinerung des betrachteten Organs vorliegt.

Auch die oben beschriebenen Depth-Cueing-Verfahren weisen erhebliche Nachteile auf: Beim Fogging wird das Bild in größerer Tiefe undeutlich, die Konturen verschwimmen "grau-in-grau", sodass der Tiefeneindruck mit einem Verlust an Information bezahlt werden muss.

Zusammenfassend weisen Depth-Cueing Verfahren insbesondere im Kontext der Darstellung von medizinischen 3D oder 4D Bilddatensätzen erhebliche Nachteile auf. Daher können die globalen Beziehungen (relative Orientierung, Abstand, Position etc.) der verschiedenen Strukturen in einem anatomischen Bilddatensatz oft nur schwer erkannt werden.

Die Erfindung hat sich daher die Aufgabe gestellt, ein neues Verfahren und eine entsprechende Vorrichtung bereitzustellen, mit dem der Tiefeneindruck von aus 3D Bilddatensätzen erzeugten 2D Bildern verbessert werden kann.

Diese Aufgabe löst die Erfindung mit den Merkmalen der unabhängigen Ansprüche 1 und 14.

Bei dem 3D Bilddatensatz gemäß Anspruch 1 kann es sich um beliebige volumetrische Daten handeln, insbesondere um durch ein medizinisches Bildgebungsverfahren wie Computertomografie, MRT oder Ultraschall erzeugte Daten, aber auch beispielsweise geologische Daten oder simulierte Datensätze aus der Flüssigkeitsdynamik. Ein erfindungsgemäßer 3D Bilddatensatz kann auch Teil eines vierdimensionalen (4D) Bilddatensatzes sein, bei welchem die vierte Dimension die Zeit ist. Beispielsweise kann es sich hierbei um einen 4D Ultraschalldatensatz zum Beispiel des bewegten Herzens handeln. Der 3D Bilddatensatz bildet vorzugsweise ein 3D Bildvolumen ab, in dem ein darzustellendes Objekt abgebildet ist. Vorzugsweise handelt es sich dabei um einen Teil des menschlichen oder tierischen Körpers oder um einen Fötus. Das 3D Bildvolumen ist vorzugsweise aus einzelnen Volumenelementen (Voxeln) aufgebaut, die jeweils einen Samplepunkt (Messwert) repräsentieren. Die Messwerte bilden zusammen die Bilddaten des 3D Bilddatensatzes.

Aus einem solchen 3D Bilddatensatz wird durch Volume-Rendering, wovon auch Surface-Rendering umfasst ist, ein zweidimensionales Bild erzeugt. Hierzu ist es zunächst notwendig, eine Blickrichtung festzulegen, aus der der 3D Bilddatensatz betrachtet werden soll. Dies kann entweder manuell durch einen Benutzer geschehen oder automatisch zum Beispiel gemäß einer vorbestimmten Blickrichtung.

Das Volume-Rendering selbst kann gemäß jeder beliebigen Methode erfolgen, zum Beispiel wie in Marc Levay: "Volume Rendering - Display of Surfaces from Volume Data" IEEE Computer Graphics and Applications, Vol. 8, Nr. 3, Mai 1988, S. 29-37 beschrieben. Beispielsweise werden dabei die Datenpunkte auf jeweils einem Strahl ("Ray"), der von einem Betrachterpunkt ausgeht, linear kombiniert. Vor oder bei dem Rendering-Verfahren wird jedem Voxel ein erster Farbwert zugeordnet, welcher aus dem Voxelwert unter Verwendung einer Original-Farbtabelle berechnet wird. Eine Original-Farbtabelle ordnet vorzugsweise jedem möglichen Voxelwert einen Farbwert, zum Beispiel einen RGB-Wert zu. Möglich ist jedoch auch eine Schwarz/Weiß-Schattierung, bei welcher die Original-Farbtabelle jedem Voxelwert einen Grauwert zuordnet.

Um ein farbiges Depth-Cueing zu erreichen, wird jedem Voxel noch ein zweiter Farbwert zugeordnet, welcher gemäß einer ersten Variante aus dem Voxelwert unter Verwendung einer Tiefen-Farbtabelle ermittelt wird, welche durch Permutation von zumindest zwei Farbkanälen aus der Original-Farbtabelle gewonnen wird. Der für das Volume-Rendering verwendete Farbwert des Voxels wird aus dem ersten und dem zweiten Farbwert an Hand einer vorgegebenen Gewichtungsfunktion in Abhängigkeit von der Tiefe des Voxels in der festgelegten Blickrichtung berechnet. Anders ausgedrückt, wird für das Depth-Cueing an Hand der Gewichtungsfunktion zwischen der Original-Farbtabelle und der Tiefen-Farbtabelle interpoliert. Für vorne liegende Objekte wird stärker die Original-Farbtabelle und für weiter hinten liegende Objekte stärker die Tiefen-Farbtabelle verwendet. Dies geschieht typischerweise während des Rendering-Schritts.

Unter der Tiefe des Voxels ist ein Wert zu verstehen, der von der Entfernung des Voxels vom virtuellen Betrachterpunkt abhängt, beispielsweise direkt der Abstand vom Betrachterpunkt oder der Abstand von einer Referenzebene, welche am Rand des Bildvolumens liegt.

Die Erfindung zeichnet sich dadurch aus, dass die Farbwerte mit zunehmender Tiefe nicht in eine beliebige, vorbestimmte Farbe abgleiten, sondern in eine Farbe, welche durch Permutation von Farbkanälen aus der Original-Farbtabelle gewonnen wird. In anderen Worten: Die in der Tiefe eingemischte Farbe ist stets unterschiedlich zu der Farbe der Original-Farbtabelle.

Vorzugsweise besteht die Original-Farbtabelle daher nicht ausschließlich aus Grauwerten.

Besteht die Original-Farbtabelle beispielsweise aus 256 Rot/Grün/Blau-Werten, so kann sie wie folgt dargestellt werden:

Original-Farbtabelle OT: (R0, G0, B0)...(R255, G255, B255).

Die Tiefen-Farbtabelle kann nun beispielsweise aus der Original-Farbtabelle durch Vertauschen des Rot- und Blaukanals gewonnen werden:

Tiefen-Farbtabelle TT: (B0, G0, R0)...(B255, G255, R255).

Dies würde bedeuten, dass Pixel, welche gemäß der Original-Farbtabelle in einem Rotton dargestellt würden, im Hintergrund des Bildes mit blau abgemischt werden, während gemäß der Original-Farbtabelle blau dargestellte Pixel im Bildhintergrund rötlicher erscheinen.

Alternativ ist es auch möglich, den Rot- und Gelb-Kanal oder den Blau- und Gelb-Kanal miteinander zu vertauschen.

Vorzugsweise werden nur zwei Farbkanäle miteinander vertauscht. Es ist jedoch auch möglich und von der Erfindung umfasst, alle drei Farbkanäle zu permutieren.

Die Erfindung ist nicht nur bei einer RGB-Farbcodierung möglich, sondern bei jeder anderen Art der Farbdarstellung bzw. jedem anderen Farbraum.

Vorzugsweise wird der Farbwert jedes Voxels an Hand der folgenden Formeln berechnet:

$$g = \text{Gewichtungsfunktion}(t) \qquad\qquad (1)$$

$$\text{Farbwert} = OT(\text{Voxelwert}) * (1-g) + TT(\text{Voxelwert}) * g \qquad (2)$$

wobei t die Tiefe des Voxels in der Blickrichtung ist, OT die Original-Farbtabelle und TT die Tiefen-Farbtabelle bezeichnet. Die Gewichtungsfunktion g(t) berechnet aufgrund der Tiefe t des Voxels einen Interpolationskoeffizienten im Intervall [0; 1], der dann als g in Formel (2) eingeht. Die Formeln (1) und (2) beschreiben eine lineare Interpolation zwischen den Werten OT und TT, wobei jede andere Art der Interpolation auch möglich ist.

Die Zuordnung des zweiten Farbwertes zu jedem Voxel kann auf zwei alternative Arten geschehen: Zum einen kann, wie oben beschrieben, eine Original-Farbtabelle und eine Tiefen-Farbtabelle verwendet werden.

Alternativ kann der zweite Farbwert einfach durch Permutation von zumindest zwei Farbkanälen aus dem ersten Farbwert gewonnen werden. Das Ergebnis entspricht demjenigen bei der Verwendung einer Tiefen-Farbtabelle, allerdings wird die Tiefen-Farbtabelle nicht explizit errechnet, sondern lediglich für jedes Voxel durch eine Permutation der Farbkanäle neben dem ersten Farbwert auch ein zweiter Farbwert ermittelt.

Gemäß einer ersten Ausführungsform erfolgen die Zuordnung des ersten Farbwertes zu jedem Voxel vor dem Rendering, und die Zuordnung des zweiten Farbwertes zu jedem Voxel während des Renderings.

Gemäß einer zweiten Ausführungsform werden den Voxelwerten zunächst keine Farbwerte zugeordnet, und erst während des Volume-Renderings wird jedem Voxel ein erster und zweiter Farbwert zugeordnet. Dies kann vorzugsweise während der Klassifizierung der Voxel im Zuge des Volume-Renderings geschehen.

Die Qualität des Tiefeneffekts wird auch durch die Wahl der Gewichtungsfunktion und die Bestimmung der Start- und Endebenen mitbestimmt. Vorzugsweise ist die Gewichtungsfunktion einer Funktion, welche zwischen einer Startebene und einer Endebene, die senkrecht zur Blickrichtung stehen, linear oder exponentiell von 0 auf 1 ansteigt. Je nach Art der Berechnung kann die Gewichtungsfunktion auch von 1 auf 0 abfallen. Die Gewichtungsfunktion kann zum Beispiel exponentiell, linear oder quadratisch exponentiell verlaufen. Die Start- und Endebenen schließen vorzugsweise das darzustellende Objekt ein.

Die Start- und Endebenen sollen vorzugsweise möglichst nahe an dem darzustellen Objekt liegen, damit die Tiefeneffekten gerade am Objekt sichtbar werden. Hierzu können die Start- und Endebenen jeweils durch die in der Blickrichtung äußeren Punkte des 3D Bilddatensatzes gelegt werden.

Bevorzugt wird jedoch eine Variante, bei der die Start- und Endebene Tangentenebenen einer Kugel sind, welche in jeder beliebigen Blickrichtung das komplette 3D Bildvolumen einschließt. Dies hat den Vorteil, dass der Abstand zwischen Start- und Endebenen aus jeder Blickrichtung konstant ist und sich der Tiefeneffekt somit nicht bei verschiedenen Blickrichtungen verändert.

Vorzugsweise sind die Voxelwerte des 3D Bildvolumens Skalarwerte. Die Erfindung ist jedoch auch anwendbar auf 3D Bildvolumen aus Vektoren, beispielsweise 3D Bildvolumen, welche mit Ultraschall gewonnene Farbdoppler ("Color-Doppler/Flow") Daten enthalten.

Die erfindungsgemäße Darstellung von Tiefeneffekten kann auch auf ein bereits berechnetes 2D Bild mit zusätzlichen Tiefeninformationen angewandt werden. Das 2D Bild wurde aus einem 3D Bilddatensatz durch Volume-Rendering erzeugt, wobei jedem Pixel des 2D Bildes eine mittlere Tiefe der in diesem Pixel abgebildeten Voxel zugeordnet wurde, sowie ein erster Pixel-Farbwert (welcher aus einer Original-Farbtabelle, das heißt, ohne Tiefeneffekte gewonnen wurde).

Daraufhin wird ein Tiefen-gewichteter Pixel-Farbwert für jedes Pixel des 2D Bildes berechnet, wobei ein zweiter Pixel-Farbwert durch Permutation von zumindest zwei Farbkanälen aus dem ersten Pixel-Farbwert gewonnen wird und aus dem ersten und zweiten Pixel-Farbwert an Hand einer vorgegebenen Gewichtungsfunktion in Abhängigkeit von der mittleren Tiefe des Pixels der Tiefen-gewichtete Pixel-Farbwert berechnet wird.

Dieses Verfahren ist insbesondere bei durch Surface-Rendering erzeugten Bildern geeignet, bei welchem jedem Pixel mit relativer Genauigkeit eine mittlere Tiefe zugeordnet werden kann.

Gemäß einer bevorzugten Ausführungsform kann das erfindungsgemäße Verfahren mit anderen Depth-Cueing-Verfahren kombiniert werden. Beispielsweise kann neben der Farbe auch noch die Intensität und/oder die Farbsättigung mit zunehmender Tiefe verändert werden. Diese Verfahren können beispielsweise entsprechend dem Artikel von D. Weiskopf und T. Ertl "Real-Time Depth-Cueing beyond Fogging", Journal of Graphics Tools, Vol. 7, Nr. 4, 2002 durchgeführt werden.

Die Erfindung ist auch auf eine entsprechende Vorrichtung zur Darstellung von 3D Bilddatensätzen auf zwei 2D Bildern gerichtet. Diese umfasst:

Diese Vorrichtung ist vorzugsweise zur Durchführung des oben beschriebenen Verfahrens geeignet. Besonders bevorzugt ist die Vorrichtung in ein medizinisches Ultraschallgerät integriert.

Schließlich ist die Erfindung auch auf ein digitales Speichermedium mit Softwarecode gerichtet, welcher einen Computer dazu veranlasst, das oben beschriebene Verfahren auszuführen, wenn der Softwarecode auf dem Computer installiert ist.

Die Erfindung wird nun an Hand von Ausführungsbeispielen in Bezug auf die beiliegenden Zeichnungen näher erläutert.

In den Zeichnungen zeigen:

Fig. 1     eine schematische Darstellung eines 3D Bildvolumens 10 mit der Gewichtungsfunktion g(t);

Fig. 2     ein Beispiel einer Gewichtungsfunktion g(t);

Fig. 3     ein Beispiel einer Original-Farbtabelle;

Fig. 4     ein Beispiel einer ersten Tiefen-Farbtabelle;

Fig. 5     ein zweites Beispiel einer Tiefen-Farbtabelle;

Fig. 6     eine perspektivische Ansicht eines 3D Bildvolumens 10 mit Start- und Endebenen gemäß dem Stand der Technik;

Fig. 7     eine perspektivische Darstellung eines 3D Bildvolumens mit Start- und Endebenen gemäß einer Ausführungsform der Erfindung;

Fig. 8     ein Beispiel eines durch Volumen-Rendering erzeugten Ultraschallbildes ohne Depth-Cueing;

Fig. 9     das Bild der Fig. 8, mit Depth-Cueing gemäß dem Stand der Technik;

Fig. 10     das Bild der Fig. 8, mit Depth-Cueing gemäß einem Ausführungsbeispiel der Erfindung;

Fig. 11     ein durch Surface-Rendering erzeugtes Ultraschallbild eines menschlichen Fötus ohne DepthCueing;

Fig. 12     das Bild der Fig. 11 mit Depth-Cueing gemäß einem Ausführungsbeispiel der Erfindung.

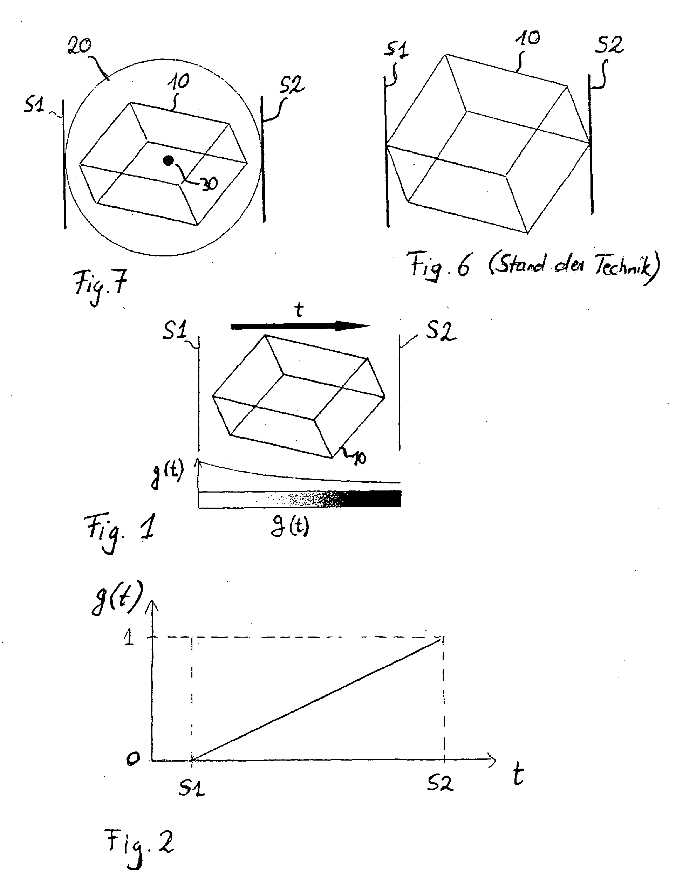

Fig. 1 demonstriert die Grundlagen des Depth-Cueing: Dabei wird ein 3D Bildvolumen in einer Blickrichtung t gerendert. Zur Darstellung von Tiefeneffekten wird eine Gewichtungsfunktion g(t) verwendet, welche im vorliegenden Beispiel exponentiell abfällt. Ferner werden eine Startebene S1 und eine Endebene S2 festgelegt, welche das 3D Bildvolumen 10 einschließen und somit den Bereich festlegen, innerhalb dessen ein Tiefeneindruck erzeugt werden soll. Die Gewichtungsfunktion g(t) kann gemäß einer anderen Ausführungsform, wie in Fig. 2 dargestellt, zwischen der Start- und Endebene S1 und S2 linear von 0 auf 1 ansteigen. Die Art der Gewichtungsfunktion bestimmt, ob die Tiefeneffekte erst bei größerer Tiefe deutlich sichtbar sein sollen, oder ob auch im Vordergrund des Bildes bereits Tiefeneffekte erkennbar sein sollen.

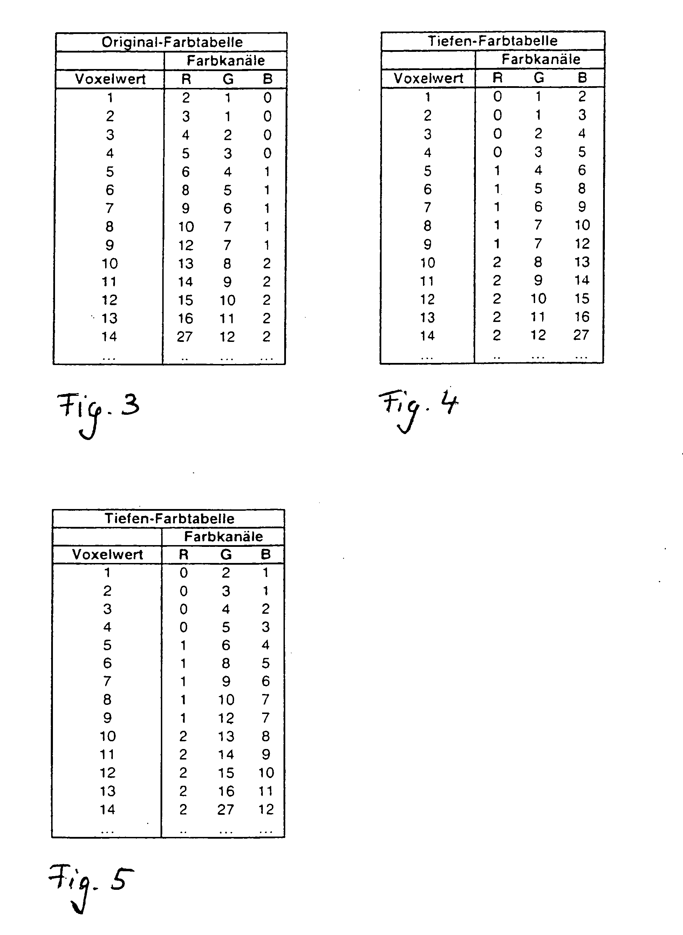

An Hand der Fig. 3 bis 5 sollen nun zwei Beispiele für Permutationen einer Original-Farbtabelle demonstriert werden. In Fig. 3 ist eine beispielhafte Original-Farbtabelle gezeigt. Diese ordnet jedem Voxelwert, der beispielsweise Werte zwischen 1 und 128 oder 1 und 256 annehmen kann, jeweils ein Farbwert für jeden der drei Farbkanäle R, G und B zu. Im dargestellten Beispiel wird die Original-Farbtabelle durch den Rund G-Kanal dominiert, was bedeutet, dass die Voxel mit einem Gelbton eingefärbt werden (die Kombination von rot und grün im additiven RGB-Farbmodell, wie z.B. bei Monitoren verwendet, ergibt gelb).

Fig. 4 zeigt nun eine Tiefen-Farbtabelle, welche durch Permutieren der R- und B-Kanäle aus der Original-Farbtabelle gewonnen wurde. Die Tiefen-Farbtabelle wird also durch Grün-Blautöne dominiert. Dies bedeutet, dass das mit der Original-Farbtabelle in gelblichen Tönen eingefärbte Bild nach hinten in einen Cyan/Blauton abgleitet. Die Tiefeneffekte sind also gut zu erkennen.

Fig. 5 zeigt ein anderes Beispiel einer Tiefen-Farbtabelle, bei welchem alle drei Farbkanäle R, G und B permutiert wurden. Eine Permutation aller drei Farbkanäle ist insofern vorteilhaft, als jede denkbare Original-Farbtabelle zu einer deutlich anderen Tiefen-Farbtabelle führt. Es kann sowohl die Permutation RGB-BRG oder RGB→GBR gewählt werden.

An Hand der Fig. 6 und 7 soll nun die bevorzugte Anordnung der Start- und Endebenen gezeigt werden. Gemäß Fig. 6 werden die Ebenen S1 und S2 an den äußersten Punkten des 3D Bildvolumens 10 in der Blickrichtung angeordnet. Dies führt zwar zu maximalen Tiefeneffekten, hat jedoch den Nachteil, dass die Start- und Endebenen S1 und S2 bei einer anderen Blickrichtung einen anderen Abstand zueinander einnehmen. Wenn also zum Beispiel das Objekt rotiert wird, ändern sich auch die Ebenen S1 und S2 und man hat folglich eine starke variation im Farbeindruck.

Daher wird bevorzugt vorgeschlagen, die Ebenen S1 und S2 durch eine so genannte "Bounding sphere" 20 zu bestimmen, das heißt, durch eine Kugel, welche das 3D Bildvolumen 10 komplett einschließt. Da die Tangentenebenen bei einer Rotation um den Schwerpunkt gleich bleiben, ändern sich hier also auch nicht die Positionen der Startebene S1 und der Endebene S2. Innerhalb dieser zwei Ebenen können die oben genannten Gewichtungsfunktionen g(t) definiert werden.

Wenn die Start- und Endebenen flache Ebenen sind, wie in Figuren 1, 7 und 8 gezeigt, bestimmt sich die Tiefe t des Voxels in der Blickrichtung vorzugsweise aus dem senkrechten Abstand des Voxels zur Startebene. Das heißt, die "Blickstrahlen", entlang derer die Tiefe t eines Voxels bemessen wird, verlaufen alle parallel zwischen der Start- und der Endebene (siehe Pfeil t in Fig. 1). Die Tiefe t wird also nicht nach der tatsächlichen Entfernung von einem virtuellen Betrachterpunkt berechnet, sondern nach der Distanz von der Startebene.

Alternativ kann die Tiefe t des Voxels auch nach der tatsächlichen Entfernung zu einem virtuellen Betrachterpunkt bestimmt werden. Die "Blickstrahlen" sind dann von dem Betrachterpunkt ausgehende divergierende Strahlen. Anstelle der flachen Start- und Endebenen S1 und S2 können in diesem Fall kugelförmig gekrümmte Ebenen gewählt werden, die von den divergierenden Blickstrahlen jeweils senkrecht geschnitten werden.

Die Fig. 8 bis 10 zeigen jeweils ein durch Volume-Rendering aus einem dreidimensionalen Ultraschalldatensatz erzeugtes 2D Bild. In Fig. 8 wurde keinerlei Depth-Cueing verwendet, während bei der Erzeugung der Fig. 9 ein bekanntes Depth-Cueing-Verfahren verwendet wurde, bei welchem den Farben mit zunehmender Tiefe schwarz beigemischt wird. Wie aus Fig. 9 erkennbar ist, entsteht auf diese Weise zwar eine Art von Tiefeneindruck, dafür verschwimmt das Bild jedoch mit dem Hintergrund. Es gehen also Bildinformationen verloren. In Fig. 10 wurde dagegen eine Tiefen-Farbtabelle gemäß einem Ausführungsbeispiel der Erfindung verwendet, welche durch Permutation aus der Original-Farbtabelle gewonnen wird. Den eher gelblichen Farben der Original-Farbtabelle wird daher im Hintergrund blau beigemischt, was sowohl deutlich zu erkennen ist, als auch einen geeigneten Tiefeneindruck vermittelt.

In den Fig. 11 und 12 wird jeweils ein durch Surface-Rendering erzeugtes 2D Bild eines 3D Ultraschallbilddatensatzes eines menschlichen Fötus gezeigt. In Fig. 11 wurde wiederum keinerlei Depth-Cueing verwendet, während in Fig. 12 ein Depth-Cueing-Verfahren gemäß einem Ausführungsbeispiel der Erfindung angewendet wurde.

## Patentansprüche

1. Verfahren zur Darstellung von 3D Bilddatensätzen auf 2D Bildern, mit den folgenden Schritten:

    a) Bereitstellen eines 3D Bilddatensatzes eines 3D Bildvolumens, wobei der 3D Bilddatensatz Voxelwerte umfasst, die jeweils einem bestimmten Voxel im 3D Bildvolumen zugeordnet sind;
    b) Festlegen einer Blickrichtung, aus der ein 2D Bild aus dem 3D Bilddatensatz erzeugt werden soll;
    c) Zuordnen eines ersten Farbwertes zu jedem Voxel, wobei der erste Farbwert aus dem Voxelwert unter Verwendung einer Original-Farbtabelle ermittelt wird;
    d) Zuordnen eines zweiten Farbwertes zu jedem Voxel, wobei der zweite Farbwert entweder aus dem Voxelwert unter Verwendung einer Tiefen-Farbtabelle ermittelt wird, welche durch Permutation von zumindest zwei Farbkanälen aus der Original-Farbtabelle gewonnen wird; oder der zweite Farbwert durch Permutation von zumindest zwei Farbkanälen aus dem ersten Farbwert gewonnen wird;

e) Generieren des 2D Bildes aus dem 3D Bilddatensatz durch ein Volume-Rendering Verfahren, wobei der für das Volume-Rendering verwendete Farbwert des Voxels aus dem ersten und dem zweiten Farbwert anhand einer vorgegebenen Gewichtungsfunktion in Abhängigkeit von der Tiefe des Voxels in der festgelegten Blickrichtung berechnet wird.

2. Verfahren nach Anspruch 1, bei welchem die Zuordnung eines ersten Farbwertes zu jedem Voxel vor dem Volume-Rendering erfolgt und die Zuordnung eines zweiten Farbwertes zu jedem Voxel während des Volume-Renderings erfolgt.

3. Verfahren nach Anspruch 1, bei welchem die Zuordnung eines ersten Farbwertes zu jedem Voxel und die Zuordnung eines zweiten Farbwertes zu jedem Voxel während des Volume-Renderings erfolgt.

4. Verfahren nach einem der vorhergehenden Ansprüche, bei welchem die Tiefen-Farbtabelle durch Permutation von drei Farbkanälen aus der Original-Farbtabelle gewonnen wird, bzw. bei welchem der zweite Farbwert durch Permutation von drei Farbkanälen aus dem ersten Farbwert gewonnen wird.

5. Verfahren nach einem der vorhergehenden Ansprüche, bei welchem die Gewichtungsfunktion eine Funktion ist, die zwischen einer Startebene und einer Endebene, welche im Wesentlichen senkrecht zur Blickrichtung stehen, linear oder exponentiell von 0 auf 1 ansteigt.

6. Verfahren nach einem der vorhergehenden Ansprüche, bei welchem der Farbwert jedes Voxels anhand der folgenden Formeln berechnet wird:

$$g = \text{Gewichtungsfunktion}(t) \qquad\qquad (1)$$

$$\text{Farbwert} = OT(\text{Voxelwert})*(1-g) + TT(\text{Voxelwert})*g \qquad (2)$$

wobei t die Tiefe des Voxels in der Blickrichtung ist, OT die Original-Farbtabelle und TT die Tiefen-Farbtabelle ist.

7. Verfahren nach einem der vorhergehenden Ansprüche, **dadurch gekennzeichnet, dass** darüber hinaus die Intensität und/oder die Sättigung des für das Volume-Rendering verwendeten Farbwertes jedes Voxels mit zunehmender Tiefe des Voxels abnimmt.

8. Verfahren zur Darstellung von 3D Bilddatensätzen auf 2D Bildern, mit den folgenden Schritten:

A) Bereitstellen eines 2D Bildes, welches aus einem 3D Bilddatensatz eines 3D Bildvolumens durch Volume-Rendering erzeugt wurde, wobei jedem Pixel des 2D Bildes ein erster Pixel-Farbwert und eine mittlere Tiefe der in diesem Pixel abgebildeten Voxel zugeordnet wurde;
b) Berechnen eines tiefengewichteten Pixel-Farbwertes für jedes Pixel des 2D Bildes, wobei ein zweiter Pixel-Farbwert durch Permutation von zumindest zwei Farbkanälen aus dem ersten Pixel-Farbwert gewonnen wird, und wobei aus dem ersten und dem zweiten Pixel-Farbwert anhand einer vorgegebenen Gewichtungsfunktion in Abhängigkeit von der mittleren Tiefe des Pixels der tiefengewichtete Pixel-Farbwert berechnet wird.

9. Verfahren nach einem der vorhergehenden Ansprüche, **dadurch gekennzeichnet, dass** Volume-Rendering ein Surface-Rendering-Verfahren beinhaltet.

10. Verfahren nach einem der vorhergehenden Ansprüche, **dadurch gekennzeichnet, dass** die Voxelwerte Skalarwerte sind.

11. Verfahren nach einem der vorhergehenden Ansprüche, bei welchem die Gewichtungsfunktion in einer Startebene den Wert 0 und in einer Endebene den Wert 1 aufweist, wobei Start- und Endebene senkrecht zur Blickrichtung stehen, **dadurch gekennzeichnet, dass** die Start- und die Endebene Tangentenebenen einer Kugel sind, welche in jeder beliebigen Blickrichtung das komplette 3D Bildvolumen einschließt.

12. Verfahren nach einem der vorhergehenden Ansprüche, bei welchem der 3D Bilddatensatz durch ein medizinisches Bildgebungsverfahren erzeugt wurde und einen Teil des menschlichen oder tierischen Körpers oder einen Fötus darstellt.

13. Verfahren nach Anspruch 12, bei welchem der 3D Bilddatensatz mittels Ultraschallbildgebung akquiriert wurde.

14. Vorrichtung zur Darstellung von 3D Bilddatensätzen auf 2D Bildern, umfassend:

- einen ersten Datenspeicher mit einem 3D Bilddatensatz eines 3D Bildvolumens, wobei der 3D Bilddatensatz Voxelwerte umfasst, die jeweils einem bestimmten Voxel im 3D Bildvolumen zugeordnet sind;
- einen Bildschirm zur Darstellung des aus dem 3D Bilddatensatz erzeugten 2D Bildes;
- zumindest ein Eingabegerät, mit dem ein Benutzer eine Blickrichtung festlegen kann, aus der ein 2D Bild aus dem 3D Bilddatensatz erzeugt werden soll;
- Rechenmittel, die zur Durchführung der folgenden Schritte eingerichtet sind: Erzeugen des 2D Bildes aus dem 3D Bilddatensatz in der festgelegten Blickrichtung durch Volume-Rendering, wobei jedem Voxel ein erster Farbwert zugeordnet wird, der aus dem Voxelwert unter Verwendung einer Original-Farbtabelle ermittelt wird, und ein zweiter Farbwert, der aus dem Voxelwert entweder unter Verwendung einer Tiefen-Farbtabelle ermittelt wird, die durch Permutation von zumindest zwei Farbkanälen aus der Original-Farbtabelle gewonnen wurde, oder der durch Permutation von zumindest zwei Farbkanälen aus dem ersten Voxelwert ermittelt wird, wobei der für das Volume-Rendering verwendete Farbwert aus dem ersten und dem zweiten Farbwert anhand einer vorgegebenen Gewichtungsfunktion in Abhängigkeit von der Tiefe des Voxels in der festgelegten Blickrichtung berechnet wird.

15. Vorrichtung, insbesondere nach Anspruch 14, welche zur Durchführung des Verfahrens nach einem der Ansprüche 1 bis 13 Konfigurier ist.

16. Medizinisches Ultraschallgerät, enthaltend eine Vorrichtung nach Anspruch 14 oder 15.

17. Digitales Speichermedium mit Softwarecode, **dadurch gekennzeichnet, dass** der Softwarecode einen Computer dazu veranlasst, das Verfahren nach einem der Ansprüche 1 bis 13 auszuführen, wenn der Softwarecode auf dem Computer ausgeführt wird.

**Claims**

1. A method for representing 3D image datasets in 2D images, comprising the following steps:

a.) providing a 3D image dataset of a 3D image volume, wherein the 3D image dataset comprises voxel values each being assigned to a certain voxel in the 3D image volume, respectively;
b.) determining a viewing direction from which a 2D image is to be produced from the 3D image dataset;
c.) assigning a first colour value to each voxel, wherein the first colour value is determined from the voxel value by using an original colour table;
d.) assigning a second colour value to each voxel, wherein the second colour value either is determined from the voxel value by using a depth colour table obtained from the original colour table by permuting at least two colour channels; or the second colour value is obtained from the first colour value by permuting at least two colour channels;
e.) generating the 2D image from the 3D image dataset by a volume rendering method, wherein the colour value of the voxel, used for the volume rendering, is calculated from the first and second colour value with a given weighting function depending on the depth of the voxel in the given viewing direction.

2. A method according to claim 1, wherein a first colour value is assigned to each voxel prior to volume rendering, and a second colour value is assigned to each voxel during volume rendering.

3. A method according to claim 1, wherein the assignment of a first colour value to each voxel and the assignment of a second colour value to each voxel is effected during volume rendering.

4. A method according to any one of the preceding claims, wherein the depth colour table is obtained from the original colour table by permuting three colour channels; or the second colour value is obtained from the first colour value by permuting three colour channels.

5. A method according to any one of the preceding claims, wherein the weighting function is a function increasing linearly or exponentially from 0 to 1 between a starting plane and an end plane which are substantially perpendicular to the viewing direction.

6. A method according to any one of the preceding claims, wherein the colour value of each voxel is calculated with the following equations:

$$g = \text{weighting function } (t) \qquad\qquad (1)$$

$$\text{colour value} = OT \text{ (voxel value)} * (1-g) + TT \text{ (voxel value)} * g \qquad (2)$$

wherein t is the depth of the voxel in the viewing direction, OT is the original colour table and TT is the depth colour table.

7. A method according to any one of the preceding claims, **characterized in that**, in addition, the intensity and/or saturation of the colour value of each voxel used for volume rendering decreases with increasing depth of the voxel.

8. A method for representing 3D image datasets in 2D images, comprising the following steps:

a.) providing a 2D image produced from a 3D image dataset of a 3D image volume by volume rendering, wherein each pixel of the 2D image has been assigned a first pixel colour value and a mean depth of the voxels displayed in this pixel;
b.) calculating a depth weighted pixel colour value for each pixel of the 2D image, wherein a second pixel colour value is obtained from the first pixel colour value by permuting at least two colour channels, and wherein the depth weighted pixel colour value is calculated from the first and second pixel colour value depending on the mean depth of the pixel by means of a given weighting function.

9. A method according to any one of the preceding claims, **characterized in that** the volume rendering includes a surface rendering method.

10. A method according to any one of the preceding claims, **characterized in that** the voxel values are scalar values.

11. A method according to any one of the preceding claims, wherein the weighting function has the value 0 in a starting plane and the value 1 in an end plane, wherein the starting and end planes are vertical to the viewing direction, **characterized in that** the starting plane and the end plane are tangential planes of a sphere including the entire 3D image volume in any viewing direction.

12. A method according to any one of the preceding claims, wherein the 3D image dataset is generated by a medical imaging method and represents a part of the human or animal body or a foetus.

13. A method according to claim 12, wherein the 3D image dataset is acquired by means of ultrasonic imaging.

14. A device for representing 3D image datasets in 2D images, comprising:

- a first data storage with a 3D image dataset of a 3D image volume, wherein the 3D image dataset comprises voxel values each assigned to a certain voxel in the 3D image volume;
- a screen for displaying the 2D image generated from the 3D image dataset;
- at least one input device enabling a user to determine a viewing direction from which a 2D image is to be generated from the 3D image dataset;
- computing means set up for performing the following steps: producing the 2D image from the 3D image dataset in the determined viewing direction by using volume rendering, wherein each voxel is assigned a first colour value determined from the voxel value by using an original colour table, and a second colour value determined from the voxel value either by using a depth colour table generated from the original colour table by permuting at least two colour channels, or determined from the first voxel value by permuting at least two colour channels, wherein the colour value used for volume rendering is calculated from the first and the second colour value by means of a given weighting function depending on the depth of the voxel in the determined viewing direction.

**15.** A device, particularly according to claim 14, configured to perform the method according to any one of the claims 1 to 13.

**16.** A medical ultrasonic device comprising a device according to claim 14 or 15.

**17.** A digital storage medium with a software code, **characterized in that** the software code induces a computer to perform the method of any one of claims 1 to 13 once the software code is carried out on the computer.

**Revendications**

**1.** Procédé pour la représentation de données d'images 3D sur des images 2D, comprenant les étapes suivantes :

a) on prépare des données d'images 3D d'un volume-image 3D, les données d'images 3D comprenant des valeurs de voxels qui sont chacune associées à un voxel déterminé dans le volume-image 3D ;
b) on détermine une direction d'observation depuis laquelle une image 2D doit être produite à partir des données d'images 3D ;
c) on associe une première valeur de couleur à chaque voxel, la première valeur de couleur étant déterminée à partir de la valeur de voxel en utilisant un tableau de couleurs d'origine ;
d) on associe une seconde valeur de couleur à chaque voxel, la seconde valeur de couleur étant soit déterminée à partir de la valeur de voxel en utilisant un tableau de couleurs en profondeur, qui a été obtenu par permutation d'au moins deux canaux de couleurs à partir du tableau de couleurs d'origine ; soit obtenue par permutation d'au moins deux canaux de couleurs à partir de la première valeur de couleur ;
e) on génère l'image 2D à partir des données d'image 3D par un procédé de restitution en volume (volume rendering), dans lequel la valeur de couleur, utilisée pour la restitution en volume, du voxel est calculée à partir de la première et de la seconde valeur de couleur au moyen d'une fonction de pondération prédéterminée et en fonction de la profondeur du voxel dans la direction d'observation fixée.

**2.** Procédé selon la revendication 1, dans lequel l'association d'une première valeur de couleur à chaque voxel a lieu avant la restitution en volume, et l'association d'une seconde valeur de couleur à chaque voxel a lieu pendant la restitution en volume.

**3.** Procédé selon la revendication 1, dans lequel l'association d'une première valeur de couleur à chaque voxel et l'association d'une seconde valeur de couleur à chaque voxel ont lieu pendant la restitution en volume.

**4.** Procédé selon l'une des revendications précédentes, dans lequel le tableau de couleurs en profondeur est obtenu par permutation de trois canaux de couleurs à partir du tableau de couleurs d'origine, ou bien dans lequel la seconde valeur de couleur est obtenue par permutation de trois canaux de couleurs à partir de la première valeur de couleur.

**5.** Procédé selon l'une des revendications précédentes, dans lequel la fonction de pondération est une fonction qui augmente de 0 à 1 de manière linéaire ou exponentielle entre un plan de départ et un plan final, lesquels sont sensiblement perpendiculaires à la direction d'observation.

**6.** Procédé selon l'une des revendications précédentes, dans lequel la valeur de couleur de chaque voxel est calculée au moyen des formules suivantes :

$$g = \text{fonction de pondération } (t) \qquad\qquad (1)$$

$$\text{valeur de couleur} = OT(\text{valeur de voxel}) * (1-g) + TT(\text{valeur de voxel}) * g$$

$$(2)$$

dans lesquelles t est la profondeur du voxel dans la direction d'observation, OT est le tableau de couleurs d'origine, et TT est le tableau de couleurs en profondeur.

7. Procédé selon l'une des revendications précédentes, **caractérisée en ce que** l'intensité et/ou la saturation de la valeur de couleur utilisée pour la restitution en volume de chaque voxel diminue lorsque la profondeur du voxel augmente.

8. Procédé pour la représentation de données d'images 3D sur des images 2D, comprenant les étapes suivantes :

a) préparation d'une image 2D, qui a été engendrée à partir de données d'images 3D d'un volume image 3D et par restitution en volume, dans laquelle une première valeur de couleur de pixel et une profondeur moyenne des voxels représentés dans ce pixel ont été associées à chaque pixel de l'image 2D ;
b) calcul d'une valeur de couleur de pixel pondérée en profondeur pour chaque pixel de l'image 2D, dans lequel une seconde valeur de couleur de pixel est obtenue par permutation d'au moins deux canaux de couleurs à partir de la première valeur de couleur de pixel, et dans lequel la valeur de couleur de pixel pondérée en profondeur est calculée à partir de la première et de la seconde valeur de couleur de pixel au moyen d'une fonction de pondération prédéterminée en fonction de la profondeur moyenne du pixel.

9. Procédé selon l'une des revendications précédentes, **caractérisé en ce que** la restitution en volume inclut un procédé de restitution en surface.

10. Procédé selon l'une des revendications précédentes, **caractérisé en ce que** les valeurs de voxels sont des valeurs scalaires.

11. Procédé selon l'une des revendications précédentes, dans lequel la fonction de pondération présente la valeur 0 dans un plan de départ et la valeur 1 dans un plan final, le plan de départ et le plan final étant perpendiculaires à la direction d'observation, **caractérisé en ce que** le plan de départ et le plan final sont des plans tangents d'une sphère qui inclut le volume image 3D complet dans toutes directions d'observation quelconques.

12. Procédé selon l'une des revendications précédentes, dans lequel les données d'images 3D ont été engendrées par un procédé d'imagerie médicale et représentent une partie d'un corps humain ou animal ou d'un foetus.

13. Procédé selon la revendication 12, dans lequel les données d'images 3D ont été acquises par imagerie aux ultrasons.

14. Appareil pour représenter des données d'images 3D sur des images 2D, comprenant :

- une première mémoire de données avec des données d'images 3D d'un volume image 3D, les données d'images 3D comprenant des valeurs de voxels qui sont respectivement associées à un voxel déterminé dans le volume image 3D ;
- un écran pour représenter l'image 2D engendrée à partir des données d'images 3D ;
- au moins un appareil de saisie au moyen duquel un utilisateur peut fixer une direction d'observation à partir de laquelle une image 2D doit être engendrée à partir des données d'images 3D ;
- des moyens de calcul qui sont conçus pour exécuter les opérations suivantes : génération de l'image 2D à partir des données d'images 3D dans la direction d'observation fixée par restitution en volume, dans lesquels une première valeur de couleur est associée à chaque voxel, valeur qui est déterminée à partir de la valeur de voxel en utilisant un tableau de couleurs d'origine, et une seconde valeur de couleur, qui est soit déterminée à partir de la valeur de voxel en utilisant un tableau de couleurs en profondeur, qui a été obtenu par permutation d'au moins et deux canaux de couleurs à partir du tableau de couleur d'origine, soit déterminée par permutation d'au moins deux canaux de couleurs à partir de la première valeur de voxel, dans lesquels la valeur de couleur utilisée pour la restitution en volume est calculée à partir de la première et de la seconde valeur de couleur à l'aide d'une fonction de pondération prédéterminée en fonction de la profondeur du voxel dans la direction d'observation fixée.

**15.** Appareil, en particulier selon la revendication 14, configuré pour la mise en oeuvre du procédé selon l'une des revendications 1 à 13.

**16.** Appareil médical à ultrasons, contenant un appareil selon la revendication 14 ou 15.

**17.** Support de mémoire numérique comprenant un code logiciel, **caractérisé en ce que** le code logiciel amène un ordinateur à exécuter le procédé selon l'une des revendications 1 à 13, quand le code logiciel est exécuté sur l'ordinateur.

Fig. 7

Fig. 6 (Stand der Technik)

Fig. 1

Fig. 2

| Original-Farbtabelle | Farbkanäle | | |
|---|---|---|---|
| Voxelwert | R | G | B |
| 1 | 2 | 1 | 0 |
| 2 | 3 | 1 | 0 |
| 3 | 4 | 2 | 0 |
| 4 | 5 | 3 | 0 |
| 5 | 6 | 4 | 1 |
| 6 | 8 | 5 | 1 |
| 7 | 9 | 6 | 1 |
| 8 | 10 | 7 | 1 |
| 9 | 12 | 7 | 1 |
| 10 | 13 | 8 | 2 |
| 11 | 14 | 9 | 2 |
| 12 | 15 | 10 | 2 |
| 13 | 16 | 11 | 2 |
| 14 | 27 | 12 | 2 |
| ... | .. | ... | ... |

Fig. 3

| Tiefen-Farbtabelle | Farbkanäle | | |
|---|---|---|---|
| Voxelwert | R | G | B |
| 1 | 0 | 1 | 2 |
| 2 | 0 | 1 | 3 |
| 3 | 0 | 2 | 4 |
| 4 | 0 | 3 | 5 |
| 5 | 1 | 4 | 6 |
| 6 | 1 | 5 | 8 |
| 7 | 1 | 6 | 9 |
| 8 | 1 | 7 | 10 |
| 9 | 1 | 7 | 12 |
| 10 | 2 | 8 | 13 |
| 11 | 2 | 9 | 14 |
| 12 | 2 | 10 | 15 |
| 13 | 2 | 11 | 16 |
| 14 | 2 | 12 | 27 |
| ... | .. | ... | ... |

Fig. 4

| Tiefen-Farbtabelle | Farbkanäle | | |
|---|---|---|---|
| Voxelwert | R | G | B |
| 1 | 0 | 2 | 1 |
| 2 | 0 | 3 | 1 |
| 3 | 0 | 4 | 2 |
| 4 | 0 | 5 | 3 |
| 5 | 1 | 6 | 4 |
| 6 | 1 | 8 | 5 |
| 7 | 1 | 9 | 6 |
| 8 | 1 | 10 | 7 |
| 9 | 1 | 12 | 7 |
| 10 | 2 | 13 | 8 |
| 11 | 2 | 14 | 9 |
| 12 | 2 | 15 | 10 |
| 13 | 2 | 16 | 11 |
| 14 | 2 | 27 | 12 |
| ... | .. | ... | ... |

Fig. 5

Fig. 8
(Stand der Technik)

Fig. 9
(Stand der Technik)

Fig. 10

Fig. 11
(Stand der Technik)

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060173326 A

**In der Beschreibung aufgeführte Nicht-Patentliteratur**

- **D. Weiskopf ; T. Ertl.** Real-Time Depth-Cueing beyond Fogging. *Journal of Graphics Tools,* 2002, vol. 7 (4
- **D. Ebert ; P. Rheingans.** Volume Illustration: Non-Photorealistic Rendering of Volume Data. *IEEE Visualization 2000,* 2000
- **Marc Levay.** Volume Rendering - Display of Surfaces from Volume Data. *IEEE Computer Graphics and Applications,* Mai 1988, vol. 8 (3), 29-37